Europäisches Patentamt

European Patent Office

Office européen des brevets

(19)

(11) Numéro de publication: **0 385 832**
**A1**

## (12) DEMANDE DE BREVET EUROPEEN

(21) Numéro de dépôt: **90400475.1**

(22) Date de dépôt: **21.02.90**

(51) Int. Cl.⁵: **H02H 9/04**

(30) Priorité: **03.03.89 FR 8902765**

(43) Date de publication de la demande:
**05.09.90 Bulletin 90/36**

(84) Etats contractants désignés:
**AT BE CH DE DK ES FR GB GR IT LI NL**

(71) Demandeur: **HAGER ELECTRO S.A.**
**Boulevard d'Europe**
**F-67210 Obernai(FR)**

(72) Inventeur: **Weiss, Henri**
**6, rue de la Marne**
**F-67370 Truchtersheim(FR)**

(74) Mandataire: **Bernasconi, Jean et al**
**CABINET LEMOINE ET BERNASCONI 13,**
**Boulevard des Batignolles**
**F-75008 Paris(FR)**

(54) **Agencement de limitation de surtensions électriques.**

(57) L'agencement comporte, branché en tête sur le disjoncteur différentiel de branchement (3) qui relie l'installation (4, 5) à protéger au réseau (1, 2), un limiteur de surtension du type à varistance (8) écoulant les surtensions par la ligne (9) vers la terre (10). Un interrupteur différentiel antitransitoire (11) sensible à la valeur du courant de fuite pour déconnecter le limiteur de surtension lorsque le courant de fuite, en l'absence de surtension, risque de provoquer le déclenchement du disjoncteur de branchement (3) est interposé sur la ligne (9), la courbe de déclenchement dudit interrupteur (11) étant décalée par rapport à la courbe de déclenchement différentiel du disjoncteur de branchement (3) dans le sens faisant déclencher l'interrupteur différentiel avant le disjoncteur de branchement.

Fig.1

EP 0 385 832 A1

## Agencement de limitation de surtensions électriques.

La présente invention a trait à un agencement de limitation de surtensions électriques, notamment pour les surtensions provenant du réseau.

Les installations électriques, à usage privé ou professionnel, alimentées par le réseau électrique de distribution (220 volts, 50 Hz en France), sont généralement reliées au réseau par un disjoncteur différentiel de branchement en tête d'installation.

Afin de protéger les équipements électroniques dans ces installations contre les surtensions provenant du réseau, par exemple les surtensions d'origine atmosphérique (foudre) ou provenant de manoeuvres sur le réseau, on utilise des limiteurs de tension qui, en général, sont installés après le disjoncteur de branchement et qui ont pour rôle d'écouler les surtensions vers la terre à l'entrée de l'installation et de les maintenir à un niveau de tension acceptable par les équipements électriques et électroniques (voir par exemple le DE-A-3.029.453).

Ces limiteurs de tensions sont réalisés à partir de varistances, c'est-à-dire de résistances variables en fonction de la tension appliquée à leurs bornes. Ces varistances, qui ont, théoriquement, un faible courant de fuite permanent vers la terre, subissent un phénomène de vieillissement provoqué par l'évacuation successive des différentes ondes de courant de surtension, ce vieillissement se traduisant par une augmentation du courant de fuite.

Lorsque ce courant permanent de fuite prend une valeur critique, par exemple supérieure à 500 mA, il se met à provoquer le fonctionnement différentiel du disjoncteur de branchement différentiel de l'installation et, la fuite étant permanente, le réarmement du disjoncteur est impossible.

Pour éviter que ce courant de fuite ne provoque ainsi la mise hors service de l'installation, on a donc déjà prévu d'assurer une déconnexion du limiteur de surtension par l'interposition d'un dispositif thermique tel qu'un fusible.

Bien entendu, ce dispositif thermique ou fusible ne doit pas fondre ou déconnecter le limiteur de surtension lors du passage d'une onde de courant importante, par exemple 500 A, correspondant à une surtension, alors qu'il doit fondre ou déconnecter en quelques dizaines de millisecondes pour des courants bien moins importants quand la varistance devient défectueuse. Ces contraintes opposées rendent cet agencement très délicat et sensible.

Par ailleurs, il peut arriver que le fusible fonde sans que la varistance soit défectueuse et, inversement, la varistance peut être défectueuse sans que le fusible fonde pour autant.

Ces agencements à base de déconnexion thermique ne sont donc pas d'une sûreté à toute épreuve.

Les EP-A-0.173.017 et EP-A-0.173.018 proposent de disposer le circuit de limitation de surtensions en amont dudit disjoncteur et d'associer au circuit de limitation de surtensions un appareil du type interrupteur différentiel qui le mettrait hors circuit lorsque le courant de fuite permanent, en l'absence de surtension, risquerait de dépasser une valeur critique.

Le circuit de limitation de surtensions est donc branché directement sur le réseau, avec tous les problèmes qui peuvent en découler.

Les DE-A-3.632.760 et DE-A-3.522.260 décrivent des installations analogues.

La présente invention se propose de remédier à ces inconvénients et de fournir un agencement de limitation de surtension dans les installations reliées au réseau, permettant d'éviter que le courant de fuite du limiteur de surtensions ne provoque la mise hors service de l'installation.

Un autre objectif de l'invention est de réaliser un tel agencement qui soit d'un coût faible et qui reste facile à mettre en oeuvre.

Un autre objectif de l'invention est encore de réaliser un tel agencement qui permette facilement de signaler immédiatement la survenue de la déconnexion pour informer soit l'utilisateur, soit un dispositif automatique, qu'il n'existe plus de protection contre les surtensions.

L'invention a pour objet un agencement de limitation de surtensions, comprenant un limiteur de surtension du type à varistance permettant d'écouler les surtensions vers la terre, et, entre le limiteur de surtension et la terre, un interrupteur différentiel du type antitransitoire, sensible à la valeur du courant de fuite, pour déconnecter le limiteur de surtension lorsque le courant de fuite permanent, en l'absence de surtension, risque de provoquer le déclenchement différentiel d'un disjoncteur de branchement reliant l'installation à protéger au réseau, caractérisé en ce que l'agencement de limitation de surtensions est placé en dérivation après le disjoncteur différentiel de branchement et en ce que l'interrupteur différentiel de type antitransitoire possède une courbe de déclenchement (courant de fuite par rapport au temps) systématiquement décalée par rapport à la courbe de déclenchement différentiel du disjoncteur de branchement dans le sens faisant déclencher ledit interrupteur différentiel antitransitoire avant le disjoncteur de branchement.

Par interrupteur différentiel antitransitoire, on entend un interrupteur qui ne se déclenche pas lors du passage d'une onde de courant, c'est-à-dire lors du passage d'une onde correspondant à l'écoulement d'une surtension. De tels interrupteurs différentiels sont dits du "type S", ou définis par exemple dans la norme allemande VDE0664.

Selon un perfectionnement avantageux, cet interrupteur différentiel antitransitoire peut comporter un pôle supplémentaire qui peut servir de contact auxiliaire pour signaler à distance l'état du limiteur ou même permettre d'isoler l'installation protégée, par commande d'un contacteur. En variante, une liaison mécanique peut être prévue pour actionner un tel circuit de signalisation et/ou de commande.

D'autres avantages et caractéristiques de l'invention apparaîtront à la lecture de la description suivante, faite à titre d'exemple non limitatif, et se référant au dessin annexé sur lequel :

la figure 1 représente une vue schématique d'un agencement selon l'invention,

la figure 2 représente un graphique montrant les deux courbes de déclenchement du disjoncteur de branchement et de l'interrupteur antitransitoire de déconnexion.

En se référant au dessin, qui illustre un exemple dans le cadre d'une installation monophasée (l'homme de l'art pourra aisément transposer le dessin au cas d'une installation triphasée, par exemple), on voit les lignes phase 1 et neutre 2 du réseau qui aboutissent au disjoncteur différentiel de branchement usuel 3.

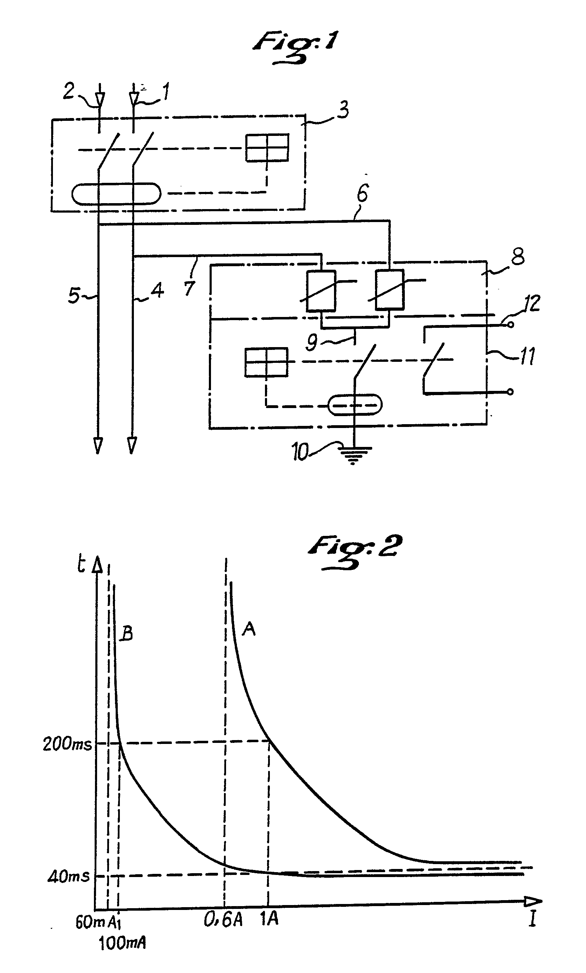

Celui-ci est, par exemple, un disjoncteur de branchement "type S" dont la courbe de déclenchement A est représentée sur la figure 2 et qui présente un retard au déclenchement du type suivant :
courant de fuite : 1 A - 2,5 A
retard minimum au déclenchement : 0,2 s - 0,05 s

Le disjoncteur de branchement 3 adresse à l'installation à protéger les lignes phase 4 et neutre 5. Immédiatement à la sortie du disjoncteur de branchement 3, les lignes 4 et 5 sont dérivées, en 6 et 7 pour être adressées à un limiteur de surtension 8 d'un type usuel constitué principalement par une varistance ayant, par exemple, un courant de fuite nominal inférieur à 1 mA

A la sortie du limiteur de surtension 8 se trouve le con'iucteur 9 qui relie la varistance à la terre 10 et qui est parcouru en permanence par le courant de fuite et, en cas de surtension, par l'onde d'écoulement de surtension.

Conformément à l'invention, un interrupteur différentiel 11 est interposé sur la ligne 9. Cet interrupteur 11 est un interrupteur différentiel de type S ayant une intensité nominale de déclenchement de 100 mA et dont la courbe de déclenchement est représentée en B s'r la figure 2.

L'interrupteur différentiel 11 est, de même d'ailleurs que le disjoncteur 3, insensible aux ondes de surtension. Par contre, il disjoncte dès que le courant de fuite dépasse la limite représentée par la courbe B, c'est-à-dire pour un courant d'une intensité inférieure à celle du courant de fuite faisant disjoncter le disjoncteur différentiel 3. Par exemple, l'interrupteur différentiel 11 fonctionne à 4 ampères en moins de 40 ms.

Tant que le courant permanent de fuite du limiteur de surtension 8, s'écoulant à travers le conducteur et dû au vieillissement du limiteur de surtension, est inférieur à la valeur faisant déclencher l'interrupteur différentiel 11, le dispositif fonctionne normalement, c'est-à-dire qu'en régime permanent, le courant de fuite se dirige vers la terre 10 et, en cas de surtension dans le réseau 1, 2, l'excès de courant est adressé par le limiteur de surtension 8 vers la terre au travers de l'interrupteur différentiel 11 qui ne réagit pas au passage de cette onde de courant.

Au contraire, si, en raison du vieillissement ou d'une défectuosité quelconque, le courant de fuite permanent atteint la valeur faisant déclencher l'interrupteur différentiel 11, celui-ci se déclenche et déconnecte le limiteur de surtension de la terre, de sorte que le disjoncteur de branchement 3 n'aura pas eu le temps de disjoncter.

De façon avantageuse, un second circuit 12, normalement ouvert par l'interrupteur différentiel 11, peut être relié au second pôle de l'interrupteur différentiel 11 pour être fermé lorsque l'interrupteur différentiel 11 est actionné et interrompt le circuit du conducteur 9, de sorte qu'à ce moment la ligne 12 peut actionner une signalisation, par exemple visuelle ou sonore, et/ou actionner un automatisme de protection, par exemple un contacteur permettant d'isoler l'équipement sensible à protéger alimenté par l'installation 4, 5.

Bien que l'invention ait été décrite à propos d'une forme de réalisation particulière, il est bien entendu qu'elle n'y est nullement limitée et qu'on peut lui apporter diverses modifications de forme ou de matériau sans pour cela s'éloigner ni de son cadre ni de son esprit.

## Revendications

1. Agencement de limitation de surtensions, comprenant un limiteur de surtension du type à varistance (8) permettant d'écouler les surtensions vers la terre (10), et, entre le limiteur de surtension (8) et la terre (10), un interrupteur différentiel du type antitransitoire, sensible à la valeur du courant de fuite, pour déconnecter le limiteur de surtension lorsque le courant de fuite permanent, en l'absence de surtension, risque de provoquer le déclenchement différentiel d'un disjoncteur de branchement (3) reliant l'installation (4, 5) à protéger au réseau (1, 2), caractérisé en ce que l'agencement de limitation de surtensions est placé en dérivation après le disjoncteur différentiel de branchement (3) et en ce que l'interrupteur différentiel de type antitransitoire (11) possède une courbe de déclenchement systématiquement décalée par rapport à la courbe de déclenchement du disjoncteur de branchement dans le sens faisant déclencher ledit interrupteur différentiel antitransitoire avant le disjoncteur de branchement.

2. Agencement selon la revendication 1, caractérisé en ce que l'interrupteur différentiel (11) est du type "S".

3. Agencement selon l'une des revendications 1 et 2, caractérisé en ce que ledit interrupteur différentiel transitoire (11) possède un contact auxiliaire pour une signalisation et/ou une commande à distance de la survenue de la déconnexion.

*Fig:1*

*Fig:2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0261606 (DEHN + SÖHNE GMBG) <br> * abrégé * | 1-3 | H02H9/04 |
| D | & DE-A-3632760 | | |
| | --- | | |
| A | ELEKTROTECHNISCHE ZEITSCHRIFT - ETZ. <br> vol. 105, no. 6/7, mars 1984, BERLIN DE <br> pages 312 - 315; Peter Hasse: <br> "Personen-und Sachschutz in Niederspannungs- <br> anlagen" <br> * le document en entier * | 1-3 | |
| | --- | | |
| A,D | EP-A-0173018 (SIEMENS) <br> * abrégé * | 1-3 | |
| | ----- | | |

| DOMAINES TECHNIQUES RECHERCHES (Int. Cl.5 ) |
|---|
| H02H |

Le présent rapport a été établi pour toutes les revendications

| Lieu de la recherche | Date d'achèvement de la recherche | Examinateur |
|---|---|---|
| LA HAYE | 21 MAI 1990 | LIBBERECHT L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)